# EUROPEAN PATENT SPECIFICATION

(11) **EP 4 020 733 B1**
(45) Date of publication and mention of the grant of the patent: **26.02.2025**
(21) Application number: 20906922.8
(22) Date of filing: 18.12.2020
(51) Int. Cl.: H02H 9/02, H02H 9/04, H02H 9/06

(54) **MODULAR SURGE PROTECTOR**
MODULARER ÜBERSPANNUNGSABLEITER
PARASURTENSEUR MODULAIRE

(30) Priority: 26.12.2019 CN 201922387988 U
(43) Date of publication of application: 29.06.2022
(73) Proprietor: Xiamen Set Electronics Co., Ltd, Xiamen, Fujian 361101 (CN)
(72) Inventor: YOU, Lianqiao, Xiamen, Fujian 361101 (CN); CAO, Anping, Xiamen, Fujian 361101 (CN); ZHANG, Xianggui, Xiamen, Fujian 361101 (CN)
(74) Representative: Bayramoglu et al.
(86) International application number: PCT/CN2020/137723
(87) International publication number: WO 2021/129540

(56) References cited:
- WO-A1-2019/205863
- CN-B- 103 580 019
- CN-U- 208 638 024
- CN-U- 209 434 871
- CN-U- 209 592 980
- CN-U- 209 675 934
- CN-U- 209 675 934
- CN-U- 209 675 934
- CN-U- 211 209 291
- JP-A- 2012 210 009
- US-A1- 2019 295 792

## Description

### TECHNICAL FIELD

The present invention provides a modular surge protector, and belongs to the technical field of lightning protection in the international patent classification (IPC).

### BACKGROUND

A surge protector is an electronic apparatus that provides safety protection for various electronic devices, instruments, and communication lines. It is intended to protect current or voltage spikes generated in electrical circuits or communication lines due to external interferences.

Because of restrictions of electronic components and so on, existing modular surge protectors are far from satisfactory to constant miniaturization of electronic products. Therefore, size optimization, reasonable spatial arrangement, greater ease of production and assembly, and higher reliability of the surge protector are problems of concern to a person skilled in the art. US 2019/295792 A1 discloses an overvoltage protection arrangement having: a plurality of planar varistors, which are arranged on a first side of a supporting plate; at least one gas arrester; and at least one thermal disconnection device, which is in close thermal contact with at least one of the varistors. The aforementioned components are surrounded by an outer housing, and electrical connection means for soldering to a printed circuit board are also provided on the second side of the supporting plate. The varistors have a parallel stack arrangement, which is delimited on each of two opposing sides by an insulating partition wall which can be attached to the supporting plate. Each partition wall has at least one opening for a varistor terminal, each varistor terminal being connected to a thermal disconnection device, which in turn comprises a spring-loaded disconnecting lever, the respective disconnecting lever being connected at its first end to the respective varistor terminal by a soldered connection and wherein its second end merges into one of the electrical terminals and penetrates through the supporting plate. The thermal disconnection device also has an insulating slide, whose free end acts on the disconnecting lever, wherein the slide runs in recesses in the respective partition wall, and a change in the position of the slide can be seen by means of a viewing opening in the outer housing. WO 2019/205863 A1 discloses a surge protector module, comprising line varistors connected in series and a heat detaching unit. The heat detaching unit comprises elastic members, insulating members, alloys having a low melting point, a connecting member, and leads disposed on the connecting member. The insulating members have an opening. The elastic members are disposed in the openings, and the elastic members have a hollow passage. The leads pass through the passages and are connected to the lead varistors via the alloys having a low melting point. The elastic members abut the insulating members at one end, abut the connecting member at another end, and are in a compressed state. The insulating members abut the alloys having a low melting point under a rebound force of the elastic members. A plurality of surge protection devices generate heat and transfer the heat to a detaching solder joint, such that the alloys having a low melting point are disconnected early when a fault occurs in a surge protection device. CN209675934 U discloses a surge protector. The device comprises a shell, and a first assembly and a second assembly which are arranged in the shell, the first assembly and the second assembly are both of a flat structure. The first assembly comprises a first frame, a first piezoresistor and a first thermal tripping device, the first piezoresistor and the first thermal tripping device are arranged on the two sides of the first frame respectively, the second assembly comprises a second frame, a second piezoresistor and a second thermal tripping device, the second piezoresistor and the second thermal tripping device are arranged on the two sides of the second frame respectively, and the discharge tube set is arranged on the second frame and arranged on the same side as the second thermal tripping device. The first frame and the second frame are arranged in a stacked mode, the first piezoresistor and the second piezoresistor are connected back to back, and a third pin electrode is led out through the discharge tube set.

### SUMMARY

In view of the defects in the prior art, an objective of the present invention is to provide a modular surge protector, which yields a compact structure and a small size through the modular design.

In order to achieve the above objective, the present invention employs the following technical solutions:
A modular surge protector includes a shell, a discharge tube unit, a first varistor unit and a second varistor unit, where the discharge tube unit, the first varistor unit and the second varistor unit are arranged in the shell. The first varistor unit and the second varistor unit are stacked, the discharge tube unit is provided at a same side of each of the first varistor unit and the second varistor unit, a first electrode is led out from the first varistor unit, a second electrode is led out from the second varistor unit, and a third electrode is led out from the discharge tube unit. The discharge tube unit includes a discharge tube frame; a first slot, a second slot and a third slot are formed in the discharge tube frame, the first slot and the second slot are provided side by side at a side of the discharge tube frame and respectively configured to accommodate the first discharge tube and the second discharge tube; the third slot are provided at a side of the discharge tube frame and cooperate with an end portion of each of the first varistor unit and the second varistor unit; the first varistor unit and the second varistor unit may be horizontally stacked; and the first discharge tube and the second discharge tube may be vertically provided.

Further, the discharge tube unit may include a first discharge tube and a second discharge tube, the first varistor unit may include a first varistor, the first electrode may be led out from a positive electrode of the first varistor, the second varistor unit may include a second varistor, and the second electrode may be led out from a positive electrode of the second varistor;
the first discharge tube and the second discharge tube may be connected through a discharge tube common electrode, the discharge tube common electrode may be electrically connected to a back electrode of the first varistor, a back electrode of the second varistor may be connected to a back electrode of the second discharge tube, and the third electrode may be led out from the first discharge tube; and
the first electrode may be a phase electrode, the second electrode may be a grounding electrode, and the third electrode may be a neutral electrode.

Further, the first varistor unit may include a first frame and a first thermal trip, the first thermal trip and the first varistor may be respectively arranged at two sides of the first frame, and the first electrode may be led out from the positive electrode of the first varistor through the first thermal trip;
the second varistor unit may include a second frame and a second thermal trip, the second thermal trip and the second varistor may be respectively arranged at two sides of the second frame, and the second electrode may be led out from the positive electrode of the second varistor through the second thermal trip; and
the first varistor and the second varistor are arranged between the first frame and the second frame.

Further, the first varistor unit and the second varistor unit may be clamped by a clamping member.

Further, each of the first thermal trip and the second thermal trip may include a spring electrode, a sliding member and a compression spring, the spring electrode may be connected to a positive electrode of a corresponding varistor through a fusible alloy, and the spring electrode may abut against the sliding member and keep the compression spring in a compressed state; and in a failure state, the fusible alloy may be molten, the sliding member may slide along a guide track on the first frame or the second frame under an action of the compression spring such that the spring electrode may be isolated from the positive electrode of the corresponding varistor, and a side of the sliding member may extend outward to form an indication portion.

Further, the shell may include a shell body and an engageable cover plate, and the first electrode, the second electrode and the third electrode may be led out from a side of a cover plate to form a welding plate structure.

Three frames are provided for the discharge tubes and the varistors to form the modular design. With the vertical discharge tubes and the horizontal varistors, the present invention has the reasonable arrangement and compact structure, and meets the requirements of miniaturization applications.

The above description is merely a summary of the technical solutions of the present invention. In order to make the technical means of the present invention understood more clearly and implemented in accordance with the content of the specification, and in order to make the above and other objectives, features and advantages of the present invention more obvious and comprehensible, specific implementations of the present invention are described below.

### BRIEF DESCRIPTION OF THE DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic external view according to an embodiment of the present invention;
FIG. 2 is another schematic external view according to an embodiment of the present invention;
FIG. 3 is a schematic view of a structure without a shell according to an embodiment of the present invention;
FIG. 4 is an internal exploded view according to an embodiment of the present invention;
FIG. 5 is a schematic view of a first varistor unit according to an embodiment of the present invention;
FIG. 6 is an exploded view of FIG. 5;
FIG. 7 is a schematic view of a second varistor unit according to an embodiment of the present invention;
FIG. 8 is an exploded view of FIG. 7;
FIG. 9 is a schematic view of a discharge tube unit according to an embodiment of the present invention; and
FIG. 10 is a schematic circuit diagram according to an embodiment of the present invention.

### DETAILED DESCRIPTION OF THE EMBODIMENTS

To make the objectives, technical solutions, and advantages of the embodiments of the present invention clearer, the following clearly and completely describes the technical solutions of the embodiments of the present invention with reference to the accompanying drawings of the embodiments of the present invention. Apparently, the described embodiments are some but not all of the embodiments of the present invention. All other embodiments obtained by the person of ordinary skill in the art based on the embodiments of the present invention without creative efforts should fall within the protection scope of the present invention.

The present invention will be described in further detail below with reference to the accompanying drawings.

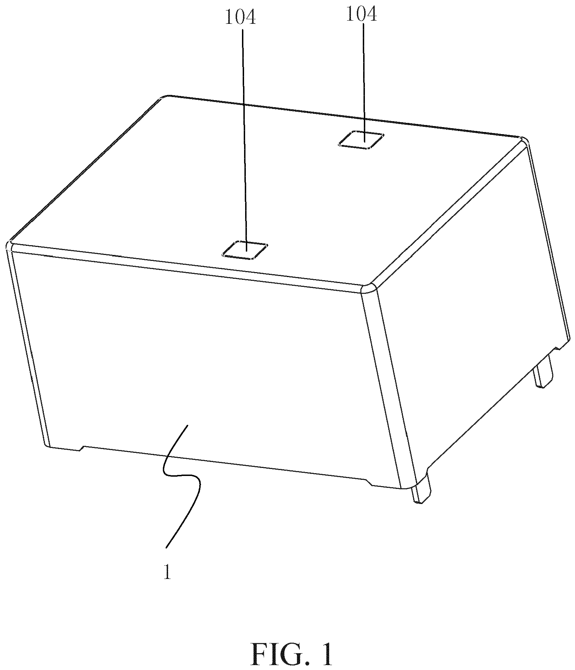

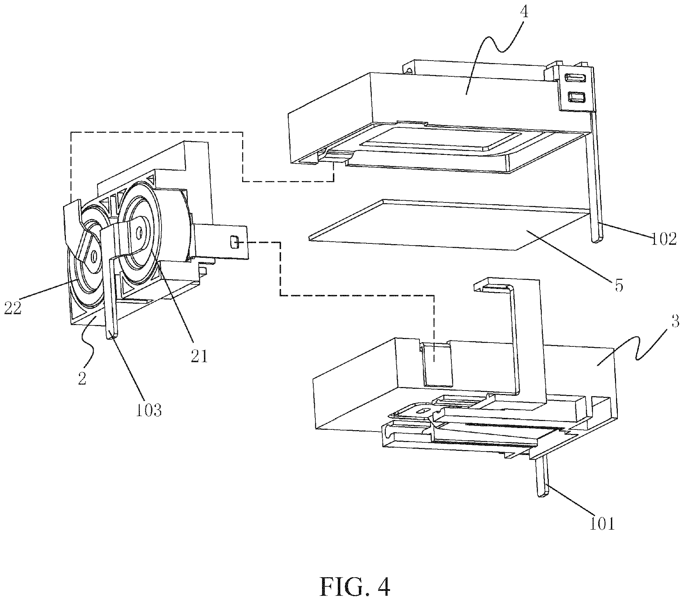

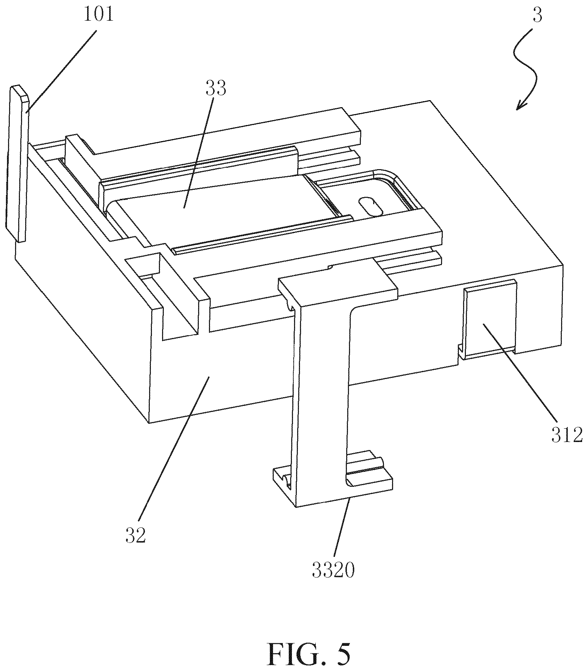

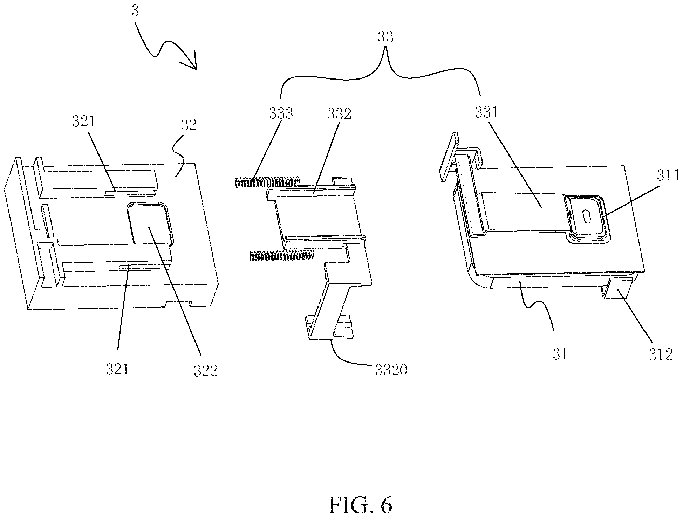

Embodiment: referring to FIG. 1 to FIG. 10, a modular surge protector includes a shell 1, a discharge tube unit 2, a first varistor unit 3 and a second varistor unit 4, where the discharge tube unit 2, the first varistor unit 3 and the second varistor unit 4 are arranged in the shell 1. The first varistor unit 3 and the second varistor unit 4 are stacked. The discharge tube unit 2 is provided at a same side of each of the first varistor unit 3 and the second varistor unit 4. A first electrode 101 is led out from the first varistor unit 3. A second electrode 102 is led out from the second varistor unit 4. A third electrode 103 is led out from the discharge tube unit 2. In the embodiment, the shell 1 includes a shell body 11 and an engageable cover plate 12. The first electrode 101, the second electrode 102 and the third electrode 103 are led out from a side of a cover plate 12 to form a welding plate structure. The first electrode is a phase electrode L, namely a live electrode. The second electrode is a grounding electrode PE. The third electrode is a neutral electrode N. Two indication windows 104 cooperated with an indication portion of an internal sliding member are formed in the shell body 11. Once tripped, the surge protector can give an indication with a corresponding color. Specifically, it turns green normally and turns red once tripped.

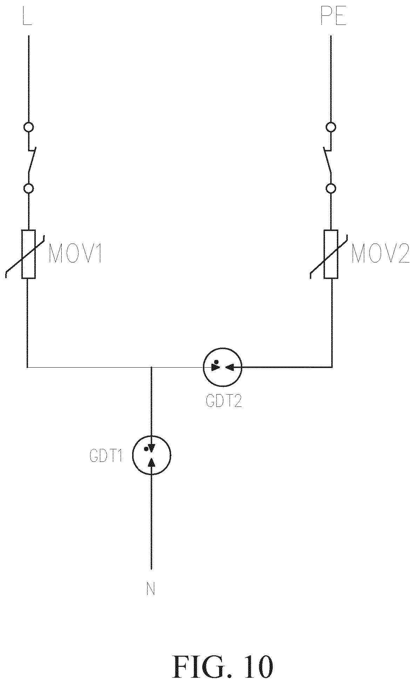

For ease of production, the protective circuit includes three modules that are respectively arranged in the discharge tube unit 2, the first varistor unit 3 and the second varistor unit 4. As shown by the circuit diagram in FIG. 10, the discharge tube unit includes a first discharge tube GDT1 and a second discharge tube GDT2. The first varistor unit includes a first varistor MOV1. The second varistor unit includes a second varistor MOV2. On the first varistor MOV1, a thermal trip is serially connected and the phase electrode L is led out. On the second varistor MOV2, a thermal trip is serially connected and the grounding electrode PE is led out. In the embodiment, the surge protector includes a series circuit for the phase electrode L, the first varistor MOV1, the first discharge tube GDT1 and the neutral electrode N, a series circuit for the first varistor MOV1, the second discharge tube GDT2, the second varistor MOV2 and the grounding electrode PE, and a series circuit for the neutral electrode N, the first discharge tube GDT1, the second discharge tube GDT2, the second varistor MOV2 and the grounding electrode PE.

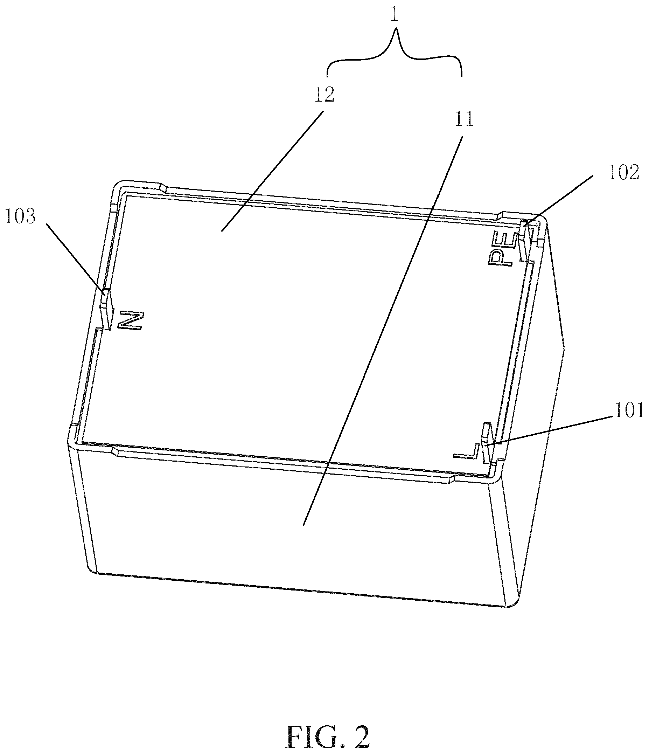

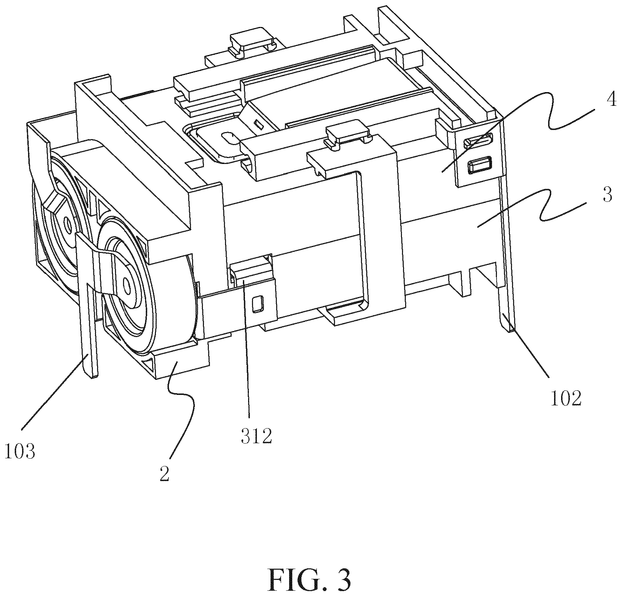

Referring to FIG. 2 to FIG. 6, the discharge tube unit 2 in the embodiment includes a first discharge tube 21 and a second discharge tube 22. The first varistor unit 3 includes a first varistor 31. The first electrode 101 is led out from a positive electrode of the first varistor 31. The second varistor unit 4 includes a second varistor 41. The second electrode 102 is led out from a positive electrode of the second varistor 41. The first discharge tube 21 and the second discharge tube 22 are diode discharge tubes and connected through a discharge tube common electrode. The discharge tube common electrode is electrically connected to a back electrode of the first varistor 31, a back electrode of the second varistor 41 is connected to a back electrode of the second discharge tube 22, and the third electrode 103 is led out from the first discharge tube 21. Referring to FIG. 3 to FIG. 9, the first varistor unit 3 further includes a first frame 32 and a first thermal trip 33. The first thermal trip 33 and the first varistor 31 are respectively arranged at two sides of the first frame 32. The first electrode 101 is led out from the positive electrode of the first varistor 31 through the first thermal trip 33. The first thermal trip 33 includes a spring electrode 331, a sliding member 332 and a compression spring 333. The spring electrode 331 and the positive electrode 311 of the first varistor 31 are connected at an opening 322 through a fusible alloy. The spring electrode 331 abuts against the sliding member 332 and keeps the compression spring 333 in a compressed state. In a failure state, the fusible alloy is molten, the sliding member 332 slides along a guide track 321 on the first frame 32 under an action of the compression spring 333 such that the spring electrode is isolated from the positive electrode of the corresponding varistor, and a side of the sliding member 332 extends outward to form an indication portion 3320. The spring electrode 331 extends outward to form a pin electrode, namely the first electrode. The first varistor and the second varistor are arranged between the first frame and a second frame. A clapboard 5 is provided between the first varistor and the second varistor. The back electrode of the first varistor 31 is led out from a sidewall of the frame to form a welding point 312.

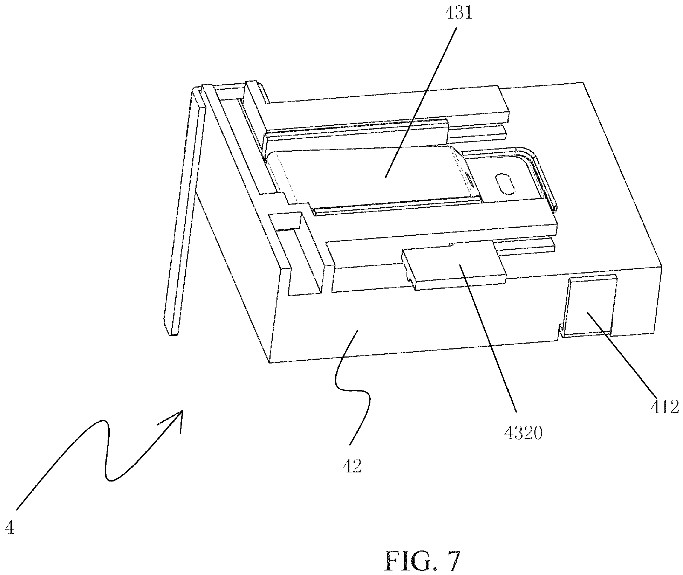

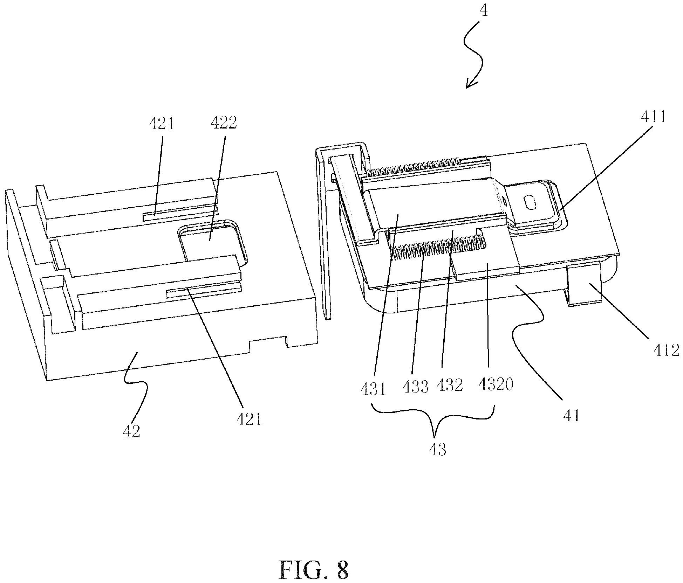

Referring to FIG. 7 and FIG. 8, the second varistor unit 4 further includes a second frame 42 and a second thermal trip 43. The second thermal trip 43 and the second varistor 41 are respectively arranged at two sides of the second frame 42. The second electrode is led out from the positive electrode of the second varistor 41 through the second thermal trip 43. The second thermal trip 43 includes a spring electrode 431, a sliding member 432 and a compression spring 433. The spring electrode 431 and the positive electrode 411 of the second varistor 41 are connected at an opening 422 through a fusible alloy. The spring electrode 431 abuts against the sliding member 432 and keeps the compression spring 433 in a compressed state. In a failure state, the fusible alloy is molten, the sliding member 432 slides along a guide track 421 on the second frame 42 under an action of the compression spring such that the spring electrode 431 is isolated from the positive electrode of the varistor, and a side of the sliding member is formed into an indication portion 4320. The spring electrode 431 is led out through the second electrode 102. The back electrode of the second varistor 41 is led out from a sidewall of the frame to form a welding point 412.

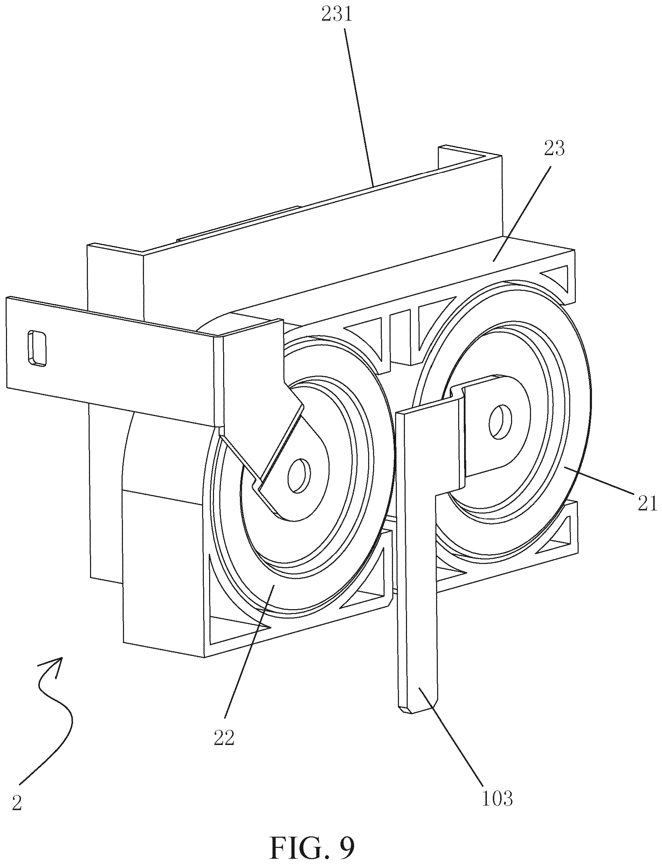

Referring to FIG. 3 and FIG. 9, the discharge tube unit 2 in the embodiment further includes a discharge tube frame 23. A first slot, a second slot and a third slot 231 are formed in the discharge tube frame 23. The first slot and the second slot are provided side by side at a side of the discharge tube frame and respectively configured to accommodate the first discharge tube 21 and the second discharge tube 22. The third slot 231 is provided at a side of the discharge tube frame and cooperates with an end portion of each of the first varistor unit 3 and the second varistor unit 4. The first varistor unit 3 and the second varistor unit 4 are horizontally stacked. The first discharge tube 21 and the second discharge tube 22 are vertically provided.

In the embodiment of the present invention, three frames are provided for the discharge tubes and the varistors to form the modular design. Particularly, the discharge tube unit is provided independently and cooperated with the varistor units. With the vertical discharge tubes and the horizontal varistors, the surge protector has the high assembly efficiency, and meets the requirements of miniaturization applications.

The above descriptions are merely embodiments based on the technical contents of the present invention.

The apparatus embodiment described above is merely schematic, where the unit described as a separate component may or may not be physically separated, and a component displayed as a unit may or may not be a physical unit, that is, the component may be located at one place, or distributed on multiple network units. Some or all of the modules may be selected based on actual needs to achieve the objectives of the solutions of the embodiments. The person of ordinary skill in the art can understand and implement the embodiments without creative efforts.

The term "one embodiment", "embodiment" or "one or more embodiments" mentioned herein means that a specific feature, structure, or characteristic described in combination with the embodiment is included in at least one embodiment of the present invention. **In** addition, it should be noted that the phrase example "in an embodiment" herein does not necessarily refer to the same embodiment.

In the specification provided herein, a large number of specific details are described. However, it is to be understood that the embodiments of the present invention can be practiced without these specific details. In some embodiments, well-known methods, structures and techniques are not shown in detail to avoid obscuring the understanding of this specification.

In the claims, any reference sign between brackets should not be constructed as a limitation on the claims. The word "include" does not exclude the presence of elements or steps not listed in the claims. The word "one" or "a/an" preceding an element does not exclude the existence of multiple such elements. The present invention can be implemented with the assistance of hardware including several different components and the assistance of a properly programmed computer. In the unit claims where several apparatuses are listed, several of the apparatuses may be embodied by the same hardware item. The use of words such as first, second, and third do not indicate any order. The words may be interpreted as names.

## Claims

1. A modular surge protector, comprising a shell (1), a discharge tube unit (2), a first varistor unit (3) and a second varistor unit (4), wherein the discharge tube unit (2), the first varistor unit (3) and the second varistor unit (4) are arranged in the shell (1); the discharge tube unit (2) is provided at a same side of each of the first varistor unit (3) and the second varistor unit (4), a first electrode (101) is led out from the first varistor unit (3), a second electrode (102) is led out from the second varistor unit (4), and a third electrode (103) is led out from the discharge tube unit (2); the discharge tube unit (2) comprises a discharge tube frame (23); a first slot, a second slot and a third slot (231) are formed in the discharge tube frame (23); the first slot and the second slot are provided side by side at a side of the discharge tube frame (23), and the first slot and the second slot are respectively configured to accommodate a first discharge tube (21) and a second discharge tube (22); the third slot (231) is provided at other side of the discharge tube frame (23), the first varistor unit (3) and the second varistor unit (4) are stacked; and **characterized in that**
the third slot (231) cooperates with an end portion of each of the first varistor unit (3) and the second varistor unit (4); the first varistor unit (3) and the second varistor unit (4) are horizontally stacked; and the first discharge tube (21) and the second discharge tube (22) are vertically provided.

2. The modular surge protector according to claim 1, **characterized in that** the discharge tube unit (2) comprises the first discharge tube (21) and the second discharge tube (22), the first varistor unit (3) comprises a first varistor (31), the first electrode (101) is led out from a positive electrode (311) of the first varistor (31), the second varistor unit (4) comprises a second varistor (41), and the second electrode (102) is led out from a positive electrode (411) of the second varistor (41);
the first discharge tube (21) and the second discharge tube (22) are connected through a discharge tube common electrode, the discharge tube common electrode is electrically connected to a back electrode of the first varistor (31), a back electrode of the second varistor (41) is connected to a back electrode of the second discharge tube (22), and the third electrode (103) is led out from the first discharge tube (21); and
the first electrode (101) is a phase electrode (L), the second electrode (102) is a grounding electrode (PE), and the third electrode (103) is a neutral electrode (N).

3. The modular surge protector according to claim 1 or 2, **characterized in that** the first varistor unit (3) comprises a first frame (32) and a first thermal trip (33), the first thermal trip (33) and the first varistor (31) are respectively arranged at two sides of the first frame (32), and the first electrode (101) is led out from the positive electrode (311) of the first varistor (31) through the first thermal trip (33);
the second varistor unit (4) comprises a second frame (42) and a second thermal trip (43), the second thermal trip (43) and the second varistor (41) are respectively arranged at two sides of the second frame (42), and the second electrode (102) is led out from the positive electrode (411) of the second varistor (41) through the second thermal trip (43); and
the first varistor (31) and the second varistor (41) are arranged between the first frame (32) and the second frame (42).

4. The modular surge protector according to claim 1, **characterized in that** the first varistor unit (3) and the second varistor unit (4) are clamped by a clamping member.

5. The modular surge protector according to claim 3, **characterized in that** each of the first thermal trip (33) and the second thermal trip (43) comprises a spring electrode (331, 431), a sliding member (332, 432) and a compression spring (333, 433), wherein
the spring electrode (331, 431) is connected to a positive electrode (311, 411) of a corresponding varistor (31, 41) through a fusible alloy;
the spring electrode (331, 431) abuts against the sliding member (332, 432) and keeps the compression spring (333, 433) in a compressed state; and
in a failure state, the fusible alloy is molten, the sliding member (332, 432) slides along a guide track (321, 421) on the first frame (32) or the second frame (42) under an action of the compression spring (333, 433), wherein the spring electrode (331, 431) is isolated from the positive electrode (311, 411) of the corresponding varistor (31, 41), and a side of the sliding member (332, 432) extends outward to form an indication portion (3320, 4320).

6. The modular surge protector according to claim 5, **characterized in that** the spring electrode (331) of the first thermal trip (33) and the positive electrode (311) of the first varistor (31) are connected at an opening (322) through the fusible alloy.

7. The modular surge protector according to claim 5, **characterized in that** the spring electrode (431) of the second thermal trip (43) and the positive electrode (411) of the second varistor (41) are connected at an opening (422) through the fusible alloy.

8. The modular surge protector according to claim 6, **characterized in that** the back electrode of the first varistor (31) is led out from a sidewall of the first frame (32) to form a welding point (312).

9. The modular surge protector according to claim 7, **characterized in that** the back electrode of the second varistor (41) is led out from a sidewall of the second frame (42) to form a welding point (412).

10. The modular surge protector according to claim 1, **characterized in that** the shell (1) comprises a shell body (11) and an engageable cover plate (12), and the first electrode (101), the second electrode (102) and the third electrode (103) are led out from a side of a cover plate (12) to form a welding plate structure.

## Patentansprüche

1. Modularer Überspannungsschutz, der ein Gehäuse (1), eine Auslassrohreinheit (2), eine erste Varistoreinheit (3) und eine zweite Varistoreinheit (4) umfasst, wobei in der Auslassrohreinheit (2) die erste Varistoreinheit (3) und die zweite Varistoreinheit (4) in dem Gehäuse (1) eingerichtet sind; die Auslassrohreinheit (2) an der gleichen Seite jeder der ersten Varistoreinheit (3) und der zweiten Varistoreinheit (4) bereitgestellt ist, eine erste Elektrode (101) aus der ersten Varistoreinheit (3) herausgeführt ist, eine zweite Elektrode (102) aus der zweiten Varistoreinheit (4) herausgeführt ist, und eine dritte Elektrode (103) aus der Auslassrohreinheit (2) herausgeführt ist; die Auslassrohreinheit (2) einen Auslassrohrrahmen (23) umfasst; ein erster Schlitz, ein zweiter Schlitz und ein dritter Schlitz (231) in dem Auslassrohrrahmen (23) gebildet sind; der erste Schlitz und der zweite Schlitz Seite an Seite an einer Seite des Auslassrohrrahmens (23) bereitgestellt sind, und der erste Schlitz und der zweite Schlitz jeweils dazu konfiguriert sind, ein erstes Auslassrohr (21) und ein zweites Auslassrohr (22) aufzunehmen; der dritte Schlitz (231) an der anderen Seite des Auslassrohrrahmens (23) bereitgestellt ist, die erste Varistoreinheit (3) und die zweite Varistoreinheit (4) gestapelt sind; und **dadurch gekennzeichnet, dass**
der dritte Schlitz (231) mit einem Endabschnitt jeder der ersten Varistoreinheit (3) und der zweiten Varistoreinheit (4) zusammenwirkt; die erste Varistoreinheit (3) und die zweite Varistoreinheit (4) horizontal gestapelt sind; und das erste Auslassrohr (21) und das zweite Auslassrohr (22) vertikal bereitgestellt sind.

2. Modularer Überspannungsschutz nach Anspruch 1, **dadurch gekennzeichnet, dass** die Auslassrohreinheit (2) das erste Auslassrohr (21) und das zweite Auslassrohr (22) umfasst, die erste Varistoreinheit (3) einen ersten Varistor (31) umfasst, die erste Elektrode (101) aus einer positiven Elektrode (311) des ersten Varistors (31) herausgeführt ist, die zweite Varistoreinheit (4) einen zweiten Varistor (41) umfasst, und die zweite Elektrode (102) aus einer positiven Elektrode (411) des zweiten Varistors (41) herausgeführt ist;
das erste Auslassrohr (21) und das zweite Auslassrohr (22) durch eine gemeinsame Elektrode des Auslassrohrs verbunden sind, die gemeinsame Elektrode des Auslassrohrs elektrisch mit einer Gegenelektrode des ersten Varistors (31) verbunden ist, eine Gegenelektrode des zweiten Varistors (41) mit einer Gegenelektrode des zweiten Auslassrohrs (22) verbunden ist, und die dritte Elektrode (103) aus dem ersten Auslassrohr (21) herausgeführt ist; und
die erste Elektrode (101) eine Phasenelektrode (L) ist, die zweite Elektrode (102) eine Erdungselektrode (PE) ist, und die dritte Elektrode (103) eine neutrale Elektrode (N) ist.

3. Modularer Überspannungsschutz nach Anspruch 1 oder 2, **dadurch gekennzeichnet, dass** die erste Varistoreinheit (3) einen ersten Rahmen (32) und eine erste thermische Auslösevorrichtung (33) umfasst, die erste thermische Auslösevorrichtung (33) und der erste Varistor (31) jeweils an zwei Seiten des ersten Rahmens (32) eingerichtet sind, und die erste Elektrode (101) aus der positiven Elektrode (311) des ersten Varistors (31) durch die erste thermische Auslösevorrichtung (33) herausgeführt ist;
die zweite Varistoreinheit (4) einen zweiten Rahmen (42) und eine zweite thermische Auslösevorrichtung (43) umfasst, die zweite thermische Auslösevorrichtung (43) und der zweite Varistor (41) jeweils an zwei Seiten des zweiten Rahmens (42) eingerichtet sind, und die zweite Elektrode (102) aus der positiven Elektrode (411) des zweiten Varistors (41) durch die zweite thermische Auslösevorrichtung (43) herausgeführt ist; und
der erste Varistor (31) und der zweite Varistor (41) zwischen dem ersten Rahmen (32) und dem zweiten Rahmen (42) eingerichtet sind.

4. Modularer Überspannungsschutz nach Anspruch 1, **dadurch gekennzeichnet, dass** die erste Varistoreinheit (3) und die zweite Varistoreinheit (4) durch ein Klemmelement geklemmt sind.

5. Modularer Überspannungsschutz nach Anspruch 3, **dadurch gekennzeichnet, dass** jede der ersten thermischen Auslösevorrichtung (33) und der zweiten thermischen Auslösevorrichtung (43) eine Federelektrode (331, 431), ein Gleitelement (332, 432) und eine Druckfeder (333, 433) umfasst, wobei
die Federelektrode (331, 431) mit einer positiven Elektrode (311, 411) eines entsprechenden Varistors (31, 41) durch eine schmelzbare Legierung verbunden ist;
die Federelektrode (331, 431) an das Gleitelement (332, 432) anliegt und die Druckfeder (333, 433) in einem komprimierten Zustand hält; und
in einem Versagenszustand die schmelzbare Legierung schmilzt, das Gleitelement (332, 432) entlang einer Führungspur (321, 421) auf dem ersten Rahmen (32) oder dem zweiten Rahmen (42) unter Einwirkung der Druckfeder (333, 433) gleitet, wobei die Federelektrode (331, 431) von der positiven Elektrode (311, 411) des entsprechenden Varistors (31, 41) isoliert ist, und sich eine Seite des Gleitelements (332, 432) nach außen erstreckt, um einen Angabeabschnitt (3320, 4320) zu bilden.

6. Modularer Überspannungsschutz nach Anspruch 5, **dadurch gekennzeichnet, dass** die Federelektrode (331) der ersten thermischen Auslösevorrichtung (33) und die positive Elektrode (311) des ersten Varistors (31) an einer Öffnung (322) durch die schmelzbare Legierung verbunden sind.

7. Modularer Überspannungsschutz nach Anspruch 5, **dadurch gekennzeichnet, dass** die Federelektrode (431) der zweiten thermischen Auslösevorrichtung (43) und die positive Elektrode (411) des zweiten Varistors (41) an einer Öffnung (422) durch die schmelzbare Legierung verbunden sind.

8. Modularer Überspannungsschutz nach Anspruch 6, **dadurch gekennzeichnet, dass** die Gegenelektrode des ersten Varistors (31) aus einer Seitenwand des ersten Rahmens (32) herausgeführt ist, um eine Schweißstelle (312) zu bilden.

9. Modularer Überspannungsschutz nach Anspruch 7, **dadurch gekennzeichnet, dass** die Gegenelektrode des zweiten Varistors (41) aus einer Seitenwand des zweiten Rahmens (42) herausgeführt ist, um eine Schweißstelle (412) zu bilden.

10. Modularer Überspannungsschutz nach Anspruch 1, **dadurch gekennzeichnet, dass** das Gehäuse (1) einen Gehäusekörper (11) und eine einrastbare Abdeckplatte (12) umfasst, und die erste Elektrode (101), die zweite Elektrode (102) und die dritte Elektrode (103) von einer Seite einer Abdeckplatte (12) herausgeführt sind, um eine Schweißplattenstruktur zu bilden.

## Revendications

1. Parasurtenseur modulaire, comprenant une coque (1), une unité de tube de décharge (2), une première unité de varistance (3) et une deuxième unité de varistance (4), dans lequel l'unité de tube de décharge (2), la première unité de varistance (3) et la deuxième unité de varistance (4) sont disposées dans la coque (1) ; l'unité de tube de décharge (2) est prévue sur un même côté de chacune de la première unité de varistance (3) et de la deuxième unité de varistance (4), une première électrode (101) sort de la première unité de varistance (3), une deuxième électrode (102) sort de la deuxième unité de varistance (4), et une troisième électrode (103) sort de l'unité de tube de décharge (2) ; l'unité de tube de décharge (2) comprend un cadre de tube de décharge (23) ; une première fente, une deuxième fente et une troisième fente (231) sont formées dans le cadre de tube de décharge (23) ; la première fente et la deuxième fente sont prévues côte-à-côte sur un côté du cadre de tube de décharge (23), et la première fente et la deuxième fente sont configurées respectivement pour recevoir un premier tube de décharge (21) et un deuxième tube de décharge (22) ; la troisième fente (231) est prévue sur un autre côté du cadre de tube de décharge (23), la première unité de varistance (3) et la deuxième unité de varistance (4) sont empilées ; et **caractérisé en ce que**
la troisième fente (231) coopère avec une partie d'extrémité de chacune de la première unité de varistance (3) et de la deuxième unité de varistance (4) ; la première unité de varistance (3) et la deuxième unité de varistance (4) sont empilées horizontalement ; et le premier tube de décharge (21) et le deuxième tube de décharge (22) sont disposés verticalement.

2. Parasurtenseur modulaire selon la revendication 1, **caractérisé en ce que** l'unité de tube de décharge (2) comprend un premier tube de décharge (21) et un deuxième tube de décharge (22), la première unité de varistance (3) comprend une première varistance (31), la première électrode (101) sort d'une électrode positive (311) de la première varistance (31), la deuxième unité de varistance (4) comprend une deuxième varistance (41), et la deuxième électrode (102) sort d'une électrode positive (411) de la deuxième varistance (41) ;
le premier tube de décharge (21) et le deuxième tube de décharge (22) sont connectés à travers une électrode commune de tube de décharge, l'électrode commune de tube de décharge est connectée électriquement à une électrode arrière de la première varistance (31), une électrode arrière de la deuxième varistance (41) est connectée à une électrode arrière du deuxième tube de décharge (22), et la troisième électrode (103) sort du premier tube de décharge (21) ; et
la première électrode (101) est une électrode de phase (L), la deuxième électrode (102) est une électrode de mise à la terre (PE), et la troisième électrode (103) est une électrode de neutre (N).

3. Parasurtenseur modulaire selon la revendication 1 ou 2, **caractérisé en ce que** la première unité de varistance (3) comprend un premier cadre (32) et un premier déclencheur thermique (33), le premier déclencheur thermique (33) et la première varistance (31) sont respectivement disposés sur deux côtés du premier cadre (32), et la première électrode (101) sort de l'électrode positive (311) de la première varistance (31) à travers le premier déclencheur thermique (33) ;
la deuxième unité de varistance (4) comprend un deuxième cadre (42) et un deuxième déclencheur thermique (43), le deuxième déclencheur thermique (43) et la deuxième varistance (41) sont respectivement disposés sur deux côtés du deuxième cadre (42), et la deuxième électrode (102) sort de l'électrode positive (411) de la deuxième varistance (41) à travers le deuxième déclencheur thermique (43) ; et
la première varistance (31) et la deuxième varistance (41) sont disposées entre le premier cadre (32) et le deuxième cadre (42).

4. Parasurtenseur modulaire selon la revendication 1, **caractérisé en ce que** la première unité de varistance (3) et la deuxième unité de varistance (4) sont enserrées par un élément de serrage.

5. Parasurtenseur modulaire selon la revendication 3, **caractérisé en ce que** chacun du premier déclencheur thermique (33) et du deuxième déclencheur thermique (43) comprend une électrode à ressort (331, 431), un organe coulissant (332, 432) et un ressort de compression (333, 433), dans lequel
l'électrode à ressort (331, 431) est connectée à une électrode positive (311, 411) d'une varistance correspondante (31, 41) à travers un alliage fusible ;
l'électrode à ressort (331, 431) vient en butée contre l'organe coulissant (332, 432) et maintient le ressort de compression (333, 433) dans un état comprimé ; et
dans un état de défaillance, l'alliage fusible est fondu, l'organe coulissant (332, 432) coulisse le long d'une piste de guidage (321, 421) sur le premier cadre (32) ou le deuxième cadre (42) sous une action du ressort de compression (333, 433), dans lequel l'électrode à ressort (331, 431) est isolée de l'électrode positive (311, 411) de la varistance correspondante (31, 41), et un côté de l'organe coulissant (332, 432) s'étend vers l'extérieur pour former une partie d'indication (3320, 4320).

6. Parasurtenseur modulaire selon la revendication 5, **caractérisé en ce que** l'électrode à ressort (331) du premier déclencheur thermique (33) et l'électrode positive (311) de la première varistance (31) sont connectées au niveau d'une ouverture (322) à travers l'alliage fusible.

7. Parasurtenseur modulaire selon la revendication 5, **caractérisé en ce que** l'électrode à ressort (431) du deuxième déclencheur thermique (43) et l'électrode positive (411) de la deuxième varistance (41) sont connectées au niveau d'une ouverture (422) à travers l'alliage fusible.

8. Parasurtenseur modulaire selon la revendication 6, **caractérisé en ce que** l'électrode arrière de la première varistance (31) sort d'une paroi latérale du premier cadre (32) pour former un point de soudure (312).

9. Parasurtenseur modulaire selon la revendication 7, **caractérisé en ce que** l'électrode arrière de la deuxième varistance (41) sort d'une paroi latérale du deuxième cadre (42) pour former un point de soudure (412).

10. Parasurtenseur modulaire selon la revendication 1, **caractérisé en ce que** la coque (1) comprend un corps de coque (11) et une plaque de couverture (12) pouvant être engagée, et la première électrode (101), la deuxième électrode (102) et la troisième électrode (103) sortent d'un côté d'une plaque de couverture (12) pour former une structure de plaque de soudure.
